# EUROPEAN PATENT SPECIFICATION

(11) **EP 1 467 832 B1**
(45) Date of publication and mention of the grant of the patent: **20.04.2011**
(21) Application number: 03731855.7
(22) Date of filing: 20.01.2003
(51) Int. Cl.: B23K 26/04, B23K 26/42

(54) **MEANS FOR VISUALIZING THE LASER BEAM IN A LASER MACHINING SYSTEM**
MITTEL ZUR SICHTBARMACHUNG DES LASERSTRAHLS IN EINEM LASERBEARBEITUNGSSYSTEM
UNITE DESTINEE A VISUALISER UN FAISCEAU LASER DANS UN SYSTEME D'USINAGE LASER

(30) Priority: 21.01.2002 SE 0200146
(43) Date of publication of application: 20.10.2004
(73) Proprietor: Permanova Lasersystem AB, 431 37 Mölndal (SE)
(72) Inventor: LINDSKOG, Anders, S-430 80 Asperö (SE); ROOS, Sven-Olov, S-443 34 Lerum (SE); SANDSTRÖM, Ulf, S-430 84 Styrsö (SE)
(74) Representative: Olsson, Gunnar
(86) International application number: PCT/SE2003/000037
(87) International publication number: WO 2003/061895

(56) References cited:
- WO-A1-00/54925
- US-A- 4 427 873
- US-A- 4 668 088
- PATENT ABSTRACTS OF JAPAN & JP 59 033 092 A (MITSUBISHI DENKI KK) 22 February 1984
- PATENT ABSTRACTS OF JAPAN & JP 10 249 566 A (AMADA CO LTD) 22 September 1998

## Description

A laser machining device including means for visualizing the laser beam.

The present invention relates to a laser machining device, for instance a laser cutting device, including means for visualizing the laser beam in the nozzle opening.

Generally, the invention relates to a visualization of the laser beam in an aperture such as the nozzle opening in a laser machining system, but specifically in a laser cutting device in which a very accurate centering of the laser beam is required. Therefore, the invention will be described in connection with a laser cutting device, but it is not limited to such a device. It can also be used in other types of laser machining systems, such as in welding machines or the like.

In a laser cutting device the laser beam is focused on a small area (spot), normally having a diameter of 0, 1-0, 5 mm, so that the high energy intensity can be used to process (vaporize) the workpiece material. Laser machining systems are frequently used for cutting, welding, surface processing and marking operations in the manufacturing industry. Today, laser cutting is more frequently used than welding. For uncomplicated products so-called x-y tables are used for cutting plane metal sheets or plates. For other products with more complicated geometries (for instance parts for the car manufacturing industry) 3D-laser machines are normally used. Thanks to the recent development of optical fibre technique such laser machining stations are designed with flexible transmission of the laser beam to the workpiece by means of optical fibres. In many cases a machining head is attached to the arm of an articulated robot for manipulating the laser beam relative to the workpiece. The transversal position (x- and y-directions) as well as the vertical position, perpendicular to the workpiece surface (z-direction), is controlled by the robot.

It has been a very rapid development with respect to Nd:YAG lasers during the last years, and this type of laser has become more and more popular compared to CO₂ lasers when it comes to 3D-laser cutting. The main reason for this is the fact that the Nd:YAG laser beam can be transferred to 6-axes industrial robots via flexible optical fibres. Both the Nd:YAG laser and the robot itself has been substantially improved during the last years which means increased demands also on the cutting tool. It must work more rapidly, it must sustain more power, it must be possible to reach and handle the tool even in a space with relatively small dimensions, the cable and hose wear must be minimized etc.

In a laser cutting device there is also an assisting gas delivered coaxially with the laser beam through the nozzle. The assisting gas could be an active gas for increasing the cutting efficiency, such as oxygen gas, or a passive gas used for removing melted metallic material from the cutting surface, such as nitrogen. In order to optimize the cutting result it is important that the laser beam is centered with respect to the nozzle opening.

Previously, it has been necessary to perform such an adjustment of the laser beam more or less manually, which is a laborious and time consuming operation. Typically, the nozzle opening was taped and then a hole was burned in the tape by the laser beam as an indication of the laser beam position. Then the laser beam was adjusted and the test repeated. Often the space available for such a procedure is limited and parts of the equipment have to be dismantled before the realignment of the beam. Such a procedure is not acceptable for instance in the car manufacturing industry.

In JP-A-10015681 it is also previously known a device for adjusting condensing of laser beam arranged on the nozzle itself. In JP-A- 60221187 it is arranged a detector arrangement at the nozzle opening.

The object of the present invention is to provide means for adjusting the laser beam in a more simple way.

According to the invention the visualizing means is arranged on the beam exit side to visualize the position of the laser beam and the nozzle opening.

Specifically the visualizing means comprises an optical image system sensitive to laser radiation as well as visible light and arranged after the nozzle opening, seen in the propagation direction of the laser beam, to make an image of the end surface of the nozzle and the laser beam in a corresponding plane.

In the following a preferred embodiment of the invention will be described more in detail with reference to the accompanying drawings, in which
figure 1 schematically illustrates an industrial robot with a laser cutting device, and
figure 2 illustrates the laser cutting device with an equipment according to the invention.

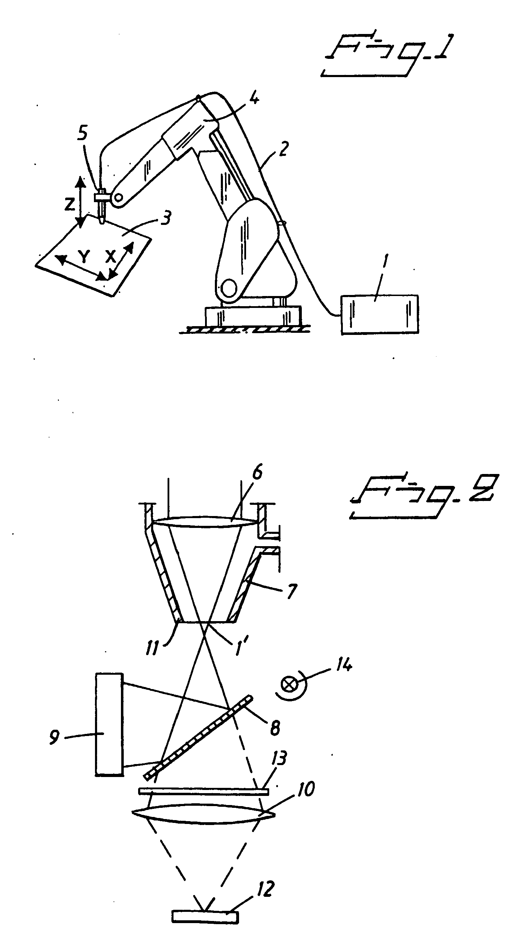

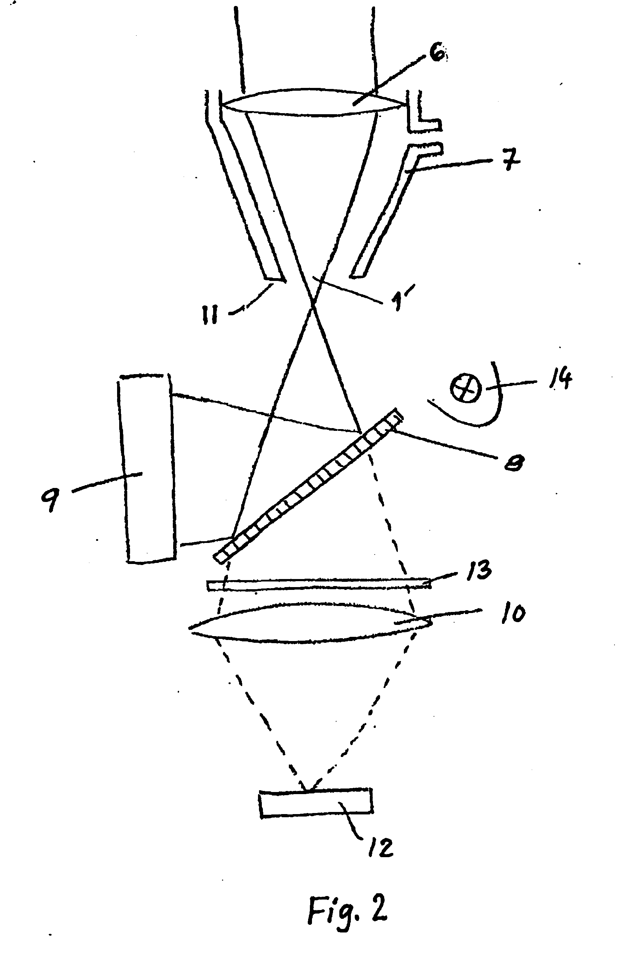

In figure 1 a fiber optical laser cutting system is illustrated. The laser beam is directed from a laser source 1, for instance a Nd:YAG laser, via an optical fiber 2 to the workpiece 3 in question. An industrial robot 4 is used for moving the laser head 5 of the system. The transversal position (x- and y-directions) as well as the vertical position, (z-direction), is controlled by the robot.

Thanks to the recent development of three-dimensional laser processing machines, welding and cutting of products with more complicated geometries have increased and will increase even more in the future. For this reason it is important that all parts in the laser processing machines are optimized. As already mentioned in the introductory portion of the specification, it is especially important in a laser cutting device that the laser beam is centered in the nozzle opening during the entire cutting process.

In figure 2 a laser beam 1' is focussed by means of a lens 6 or a mirror on the workpiece to be processed. Coaxially with the laser beam there is a nozzle 7 for the assisting gas. According to the invention there is also a measuring equipment arranged, in this case on the beam exit side, under the cutting nozzle, for visualizing the laser beam. The measuring equipment comprises a dielectric mirror 8 which is deflecting the main part of the laser power to an absorbing unit 9 which takes care of the main part of the power for cooling it away. Behind the dielectric mirror 8 an optical image system 10 has been arranged which system provides an image of the end surface 11 of the nozzle towards a camera which is sensitive to Nd:YAG laser radiation and visible light, for instance a CCD camera or the like 12. Both the end surface 11 of the nozzle and the laser beam 1' is visualized by the camera in the corresponding plane, and a centering of the laser beam can easily be performed. The position of the laser beam in the nozzle opening can be observed while the beam is adjusted.

To make sure that the contrast between the end surface 11 of the nozzle and the laser beam 1' is good enough it might be necessary to introduce another damping filter 13 for the laser beam and/or an auxiliary light source 14 to illuminate the nozzle opening and thereby improve the image of the end surface 11 of the nozzle.

By having this type of camera in the system to make an image of the nozzle opening and the beam, it also means that other measurements can be performed by using image processing techniques. Not only the position of the laser beam relative to the nozzle, but also the position of the nozzle and the laser beam itself relative to the measuring equipment can be determined. By knowing the fixed position of the measuring equipment, the spatial position of the nozzle and the beam can also be determined. By means of such positional information, the position in the xy-plane is known. If the measuring equipment is moved relative to the nozzle and the beam along the axis of the beam the focus of the beam and the nozzle can be determined by using image processing techniques. In this way all positions, also in the z-direction, can be determined.

The invention is not limited to the example which has been described here but can be varied within the scope of the accompanying claims.

## Claims

1. A laser machining device in which the laser beam is transmitted from a laser source (1) to the work piece (3) to be processed, said laser machining device having a nozzle (7) arranged coaxially with the laser beam (1') to deliver an assisting gas and also having means for visualizing the position of the laser beam in the nozzle opening, said visualizing means comprising an optical image system (10, 12) **characterized in that** said optical image system (10, 12) is sensitive to laser radiation as well as visible light and is arranged after the nozzle (7) seen in the propagation direction of the laser beam (1') to provide an image of the end surface (11) of the nozzle and the laser beam (1').

2. A laser machining device according to claim 1 **characterized in that** the optical image system (10, 12) comprises a camera, for instance a CCD-camera.

3. A laser machining device according to claim 2 **characterized by** a dielectric mirror (8) arranged in front of the image system (10, 12) for deviating the main part of the power of the laser beam to an absorbing unit (10).

4. A laser machining device according to claim 1 **characterized by** a damping filter (13) for the laser beam (1') to improve the contrast between the end surface (11) of the nozzle and the laser beam (1') for the image system (10, 12).

5. A laser machining device according to claim 1 **characterized by** an auxiliary light source (14) directed towards the nozzle opening in order to improve the image of the end surface (11) of the nozzle for the image system (10, 12).

6. A laser machining system according to claim 2 **characterized in that** the image generated by the image system (10, 12) is processed for determining position and sharpness (focus) for the nozzle (7) and the laser beam (1').

7. A laser machining device according to claim 6 **characterized in that** the image system (10, 12) is movable in order to determine the position of the focus of the laser beam (1').

## Patentansprüche

1. Laserbearbeitungsvorrichtung, bei welcher der Laserstrahl von einer Laserquelle (1) zu dem zu verarbeitenden Werkstück (3) übertragen wird, wobei die Laserbearbeitungsvorrichtung eine zum Laserstrahl (1') koaxial angeordnete Düse (7) aufweist, um ein Hilfsgas abzugeben, und Mittel zur Visualisierung der Position des Laserstrahls in der Düsenöffnung aufweist, wobei die Visualisierungsmittel ein optisches Bildsystem (10, 12) umfassen, **dadurch gekennzeichnet, dass** das optische Bildsystem (10, 12) empfindlich auf Laserstrahlung und sichtbares Licht ist und in Ausbreitungsrichtung des Laserstrahls (1') nach der Düse (7) angeordnet ist, um ein Bild der Endfläche (11) der Düse und des Laserstrahls (1') bereitzustellen.

2. Laserbearbeitungsvorrichtung nach Anspruch 1, **dadurch gekennzeichnet, dass** das optische Bildsystem (10, 12) eine Kamera umfasst, insbesondere eine CCD-Kamera.

3. Laserbearbeitungsvorrichtung nach Anspruch 2, **gekennzeichnet durch** einen dielektrischen Spiegel (8), der vor dem optischen Bildsystem (10, 12) angeordnet ist, um den Hauptteil der Energie des Laserstrahls zu einer Absorbiereinheit (10) abzulenken.

4. Laserbearbeitungsvorrichtung nach Anspruch 1, **gekennzeichnet durch** einen Dämpfungsfilter (13) für den Laserstrahl (1'), um den Kontrast zwischen der Endfläche (11) der Düse und dem Laserstrahl (1') für das Bildsystem (10, 12) zu verbessern.

5. Laserbearbeitungsvorrichtung nach Anspruch 1, **gekennzeichnet durch** eine Hilfslichtquelle (14), die zur Düsenöffnung hin gerichtet ist, um das Bild der Endfläche (11) der Düse für das Bildsystem (10, 12) zu verbessern.

6. Laserbearbeitungsvorrichtung nach Anspruch 2, **dadurch gekennzeichnet, dass** das durch das Bildsystem (10, 12) erzeugte Bild verarbeitet wird, um die Position und die Schärfe (Fokus) für die Düse (7) und den Laserstrahl (1') zu bestimmen.

7. Laserbearbeitungsvorrichtung nach Anspruch 6, **dadurch gekennzeichnet, dass** das Bildsystem (10, 12) beweglich ist, um die Position des Brennpunkts (Fokus) des Laserstrahls (1') zu bestimmen.

## Revendications

1. Dispositif d'usinage laser dans lequel le faisceau laser est transmis d'une source laser (1) vers la pièce (3) de travail à traiter, ledit dispositif d'usinage laser ayant une buse (7) agencée coaxialement par rapport au faisceau laser (1') pour distribuer un gaz d'assistance et ayant également un moyen permettant de visualiser la position du faisceau laser dans l'ouverture de la buse, ledit moyen de visualisation comprenant un système d'imagerie optique (10, 12) **caractérisé en ce que** ledit système d'imagerie optique (10, 12) est sensible au rayonnement laser ainsi qu'à la lumière visible et est agencé après la buse (7) en regardant dans la direction de propagation du faisceau laser (1') afin de fournir une image de la surface d'extrémité (11) de la buse et du faisceau laser (1').

2. Dispositif d'usinage laser selon la revendication 1 **caractérisé en ce que** le système d'imagerie optique (10, 12) comprend une caméra, telle qu'une caméra CCD.

3. Dispositif d'usinage laser selon la revendication 2 **caractérisé par** un miroir diélectrique (8) agencé en face du système d'imagerie (10, 12) pour dévier la majeure partie de la puissance du faisceau laser à une unité (10) d'absorption.

4. Dispositif d'usinage laser selon la revendication 1 **caractérisé par** un filtre d'amortissement (13) pour le faisceau laser (1') afin d'améliorer le contraste entre la surface d'extrémité (11) de la buse et le faisceau laser (1') pour le système d'imagerie (10, 12).

5. Dispositif d'usinage laser selon la revendication 1 **caractérisé par** une source (14) de lumière auxiliaire dirigée vers l'ouverture de la buse en vue d'améliorer l'image de la surface d'extrémité (11) de la buse pour le système d'imagerie (10, 12).

6. Système d'usinage laser selon la revendication 2 **caractérisé en ce que** l'image générée par le système d'imagerie (10, 12) est traitée pour déterminer la position et la netteté (foyer) pour la buse (7) et le faisceau laser (1').

7. Dispositif d'usinage laser selon la revendication 6 **caractérisé en ce que** le système (10, 12) d'imagerie peut être déplacé en vue de déterminer la position du foyer du faisceau laser (1').
